# EUROPEAN PATENT APPLICATION

(11) **EP 4 715 953 A1**
(43) Date of publication of application: **25.03.2026**
(21) Application number: 25202538.2
(22) Date of filing: 16.09.2025
(51) Int. Cl.: H01M 10/42, H01M 50/547, H01M 50/574

(54) **BATTERY ASSEMBLY AND BATTERY DRIVING DEVICE**

(30) Priority: 19.09.2024 KR 20240126802
(71) Applicant: SAMSUNG SDI CO., LTD., Yongin-si, Gyeonggi-do 17084 (KR)
(72) Inventor: KOH, Seok, 17084 YONGIN-SI (KR)
(74) Representative: Regimbeau

(57) **Abstract**

A battery assembly includes a battery cell that accommodates an electrode assembly and includes a first electrode terminal on a first side surface of the battery cell and a second electrode terminal on a second side surface of the battery cell different from the first side surface, a protective circuit module on the first side surface of the battery cell, and a connection unit electrically connecting the first electrode terminal to the protective circuit module and the second electrode terminal to the protective circuit module.

## Description

### FIELD

Aspects of embodiments of the present disclosure relate to a battery assembly and a battery driving device.

### TECHNICAL BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In general, a secondary battery is provided with a protective circuit module (PCM) to protect the secondary battery from various risks such as overcharging, over-discharging, and overcurrent. Accordingly, the secondary battery is used in the form of a battery assembly in which the protective circuit module is integrated with a battery cell.

The protective circuit module is electrically connected to the battery cell and an external load, and is configured to selectively interrupt the electrical connection between the battery cell and the external load based on the characteristics of the discharge current flowing to the external load or the charging current flowing to the battery cell.

Generally, the protective circuit module may include chips that function as switching elements or protects the battery cell, and a number of passive components for driving these chips.

With the recent trend toward reducing (e.g., minimizing) the size of a battery driving device using the battery assembly, there is a corresponding demand to reduce the size of the battery assembly. However, the protective circuit module tends to have more chips and increases in size as the protective circuit module continues to enhance operational precision and expand functionality.

Accordingly, various efforts are underway to accommodate a high-performance protective circuit module within an increasingly compact battery cell.

The above information disclosed in this Background section is for enhancement of understanding of the background of the present disclosure, and therefore, it may contain information that does not constitute related (or prior) art.

### SUMMARY

To solve the problems described above, embodiments of the present disclosure are directed to a battery assembly and a battery driving device.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to the invention, there is provided a battery assembly and a battery driving device as defined in the claims.

According to some embodiments of the present disclosure, there is provided a battery assembly including: a battery cell that accommodates an electrode assembly and includes a first electrode terminal on a first side surface of the battery cell and a second electrode terminal on a second side surface of the battery cell different from the first side surface; a protective circuit module on the first side surface of the battery cell; and a connection unit electrically connecting the first electrode terminal to the protective circuit module and the second electrode terminal to the protective circuit module.

In some embodiments, the protective circuit module is formed to have a size corresponding to a gap between one end of the first side surface and the first electrode terminal.

In some embodiments, the second electrode terminal is on the second side surface that is perpendicular to the first side surface where the first electrode terminal is positioned.

In some embodiments, the connection unit includes: a first connecting part on the first side surface and connecting the first electrode terminal to the protective circuit module; and a second connecting part on the first and second side surfaces to be bent along the first and second side surfaces and connecting the second electrode terminal to the protective circuit module.

In some embodiments, the first connecting part includes: a first terminal tab connected to the first electrode terminal; and a first module tab connected to the protective circuit module and having a stepped portion extending from the first terminal tab.

In some embodiments, a height of the stepped portion corresponds to a height of the first electrode terminal that protrudes from the first side surface.

In some embodiments, the second connecting part includes: a second terminal tab on the second side surface and connected to the second electrode terminal; and a second module tab on the first side surface to be oriented perpendicularly to the second terminal tab, and connected to the protective circuit module.

In some embodiments, the second electrode terminal includes a second electrode plate including a nickel alloy.

In some embodiments, the second electrode terminal is on the second side surface at a set distance away from a bending portion connecting the first side surface and the second side surface.

In some embodiments, the second electrode terminal is formed to have a length greater than the set distance from the bending portion.

In some embodiments, in a short-side direction of the second side surface, a width of the second electrode terminal is less than a width of the battery cell and greater than a width of the connection unit.

In some embodiments, the protective circuit module includes: a first substrate on which protective circuit elements are integrated; and a substrate cap on the first substrate to cover the protective circuit elements.

In some embodiments, the protective circuit module further includes a second substrate on a bottom surface of the first substrate and connected to the connection unit and an external device.

In some embodiments, the second substrate includes: a first connection tab electrically connected to the first electrode terminal; and
a second connection tab electrically connected to the second electrode terminal.

In some embodiments, the second substrate further includes: a lead-out part that extends from one side between the first connection tab and the second connection tab; and a connector on one surface of the lead-out part and connected to the external device.

In some embodiments, the second substrate includes: a flexible printed circuit board.

In some embodiments, the battery assembly further includes an insulation unit on the first side surface between the first electrode terminal and one end of the first side surface.

In some embodiments, the insulation unit includes: a first insulating member on the first side surface and interposed between the battery cell and a first connecting part connected to the first electrode terminal; and a second insulating member on the first insulating member and interposed between the battery cell and the protective circuit module.

According to some embodiments of the present disclosure, there is provided a battery driving device including: an operation unit configured to operate by receiving power; a housing that accommodates the operation unit to fix the operation unit; and a power unit that is fixed within the housing to supply power to the operation unit, wherein the power unit includes: a battery cell that accommodates an electrode assembly and includes a first electrode terminal provided on a first side surface of the battery cell and a second electrode terminal provided on a second side surface of the battery cell; a protective circuit module on the first side surface of the battery cell; and a connection unit electrically connecting the first electrode terminal to the protective circuit module and the second electrode terminal to the protective circuit module.

In some embodiments, the protective circuit module is formed to have a size corresponding to a gap between one end of the first side surface and the first electrode terminal.

According to some embodiments of the present disclosure, it is possible to expand the area available for the placement of the protective circuit module, thereby allowing an increase in the size of the protective circuit module while maintaining the same overall size of the battery assembly.

According to some embodiments of the present disclosure, increased number of protective circuit elements can be arranged, thereby providing the protective circuit module with higher operational precision and higher functionality.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of a battery assembly according to some embodiments of the present disclosure.
FIG. 2 is an exploded perspective view of a battery assembly according to some embodiments of the present disclosure.
FIG. 3 is an enlarged view of a specific region of a battery assembly according to some embodiments of the present disclosure.
FIG. 4 illustrates the first connecting part according to some embodiments of the present disclosure.
FIG. 5 illustrates a state in which the first electrode terminal is connected to the first connecting part according to some embodiments of the present disclosure.
FIG. 6 illustrates the second connecting part according to some embodiments of the present disclosure.
FIG. 7 illustrates a state in which the second electrode terminal is connected to the second connecting part according to some embodiments of the present disclosure.
FIG. 8 illustrates a cross-sectional view of the protective circuit module according to some embodiments of the present disclosure.
FIG. 9 illustrates a second substrate according to some embodiments of the present disclosure.
FIG. 10 illustrates a battery driving device according to some embodiments of the present disclosure.
FIG. 11 illustrates a battery assembly arranged in a battery driving device according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

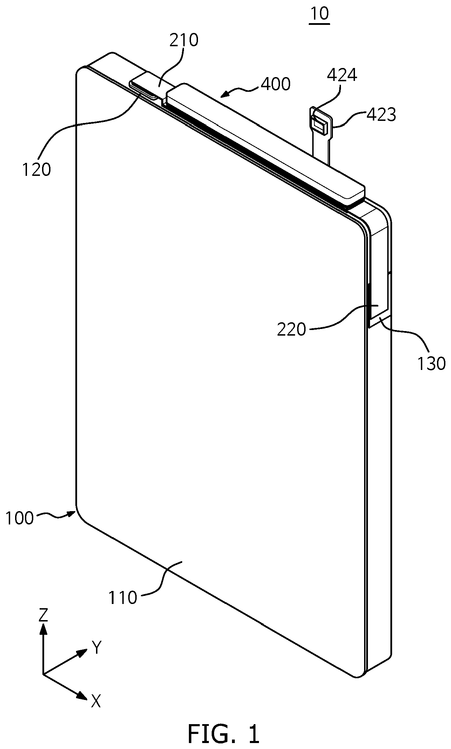

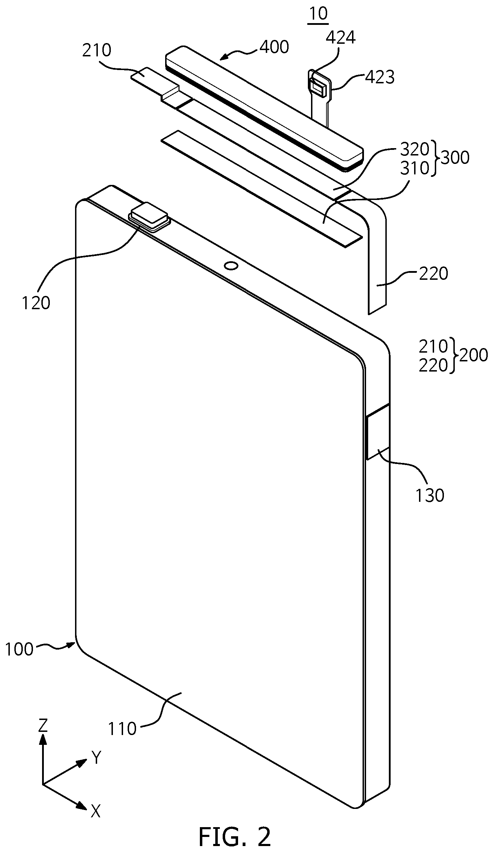

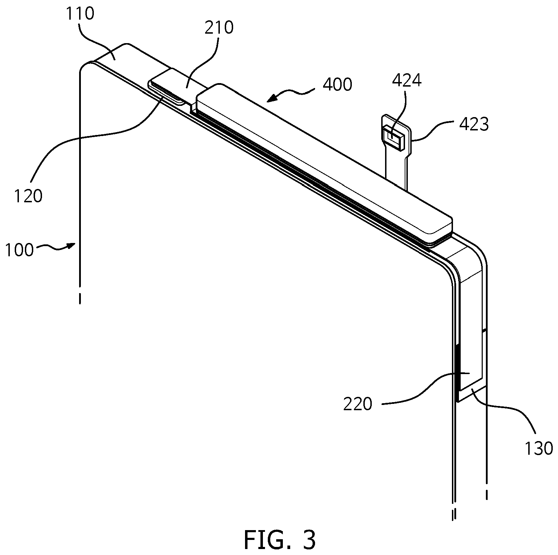

FIG. 1 is a perspective view of a battery assembly according to some embodiments of the present disclosure. FIG. 2 is an exploded perspective view of a battery assembly according to some embodiments of the present disclosure. FIG. 3 is an enlarged view of a specific region of a battery assembly according to some embodiments of the present disclosure.

Referring to FIGS. 1 to 3, a battery assembly 10 according to some embodiments of the present disclosure may include a battery cell 100, a connection unit 200, an insulation unit 300, and a protective circuit module 400.

The battery cell 100 may include an electrode assembly, a case 110 that accommodates the electrode assembly, a first electrode terminal 120 provided on a first side surface of the case 110, and a second electrode terminal 130 provided on a second side surface of the case 110.

In some embodiments, the electrode assembly may include a first electrode, a second electrode, and a separator. Here, the first electrode may serve as a positive electrode, and the second electrode may serve as a negative electrode. For example, the electrode assembly may be a winding-type electrode assembly in which the first electrode and the second electrode are wound with the separator, which is an insulator, interposed therebetween. In another example, the electrode assembly may be a stacked-type electrode assembly in which the first electrode and the second electrode are alternately stacked with the separator disposed (i.e., positioned/located/arranged) therebetween. In some embodiments, the electrode assembly may include any other structure that includes the first and second electrodes. The structure of the electrode assembly described above is provided by way of example only, and the scope of the present disclosure is not limited thereto.

The electrode assembly may further include a first electrode tab and a second electrode tab. The first electrode tab may be separately formed and connected to an uncoated portion of the first electrode, or the first electrode tab may be formed by punching out a portion of the uncoated portion. The first electrode tab may extend from the uncoated portion and come into contact with a first electrode terminal 120. The first electrode tab may serve as a path for current flow between the first electrode and the first electrode terminal 120. Similarly, the second electrode tab may be separately formed and connected to an uncoated portion of the second electrode, or the second electrode tab may be formed by punching out a portion of the uncoated portion. The second electrode tab may extend from the uncoated portion and come into contact with the case 110. The second electrode tab may serve as a path for current flow between the second electrode and the case 110.

In some embodiments, the case 110 may form the overall outer appearance of the battery cell 100. The case 110 may be made of stainless steel (SUS). In some embodiments, the entire case 110 may be made of a conductive metal such as aluminum, an aluminum alloy, or a nickel-plated steel. By forming the case 110 with a metal material, the metallic second electrode terminal 130 may be disposed on any side surface of the case 110 and connected to the case 110 by welding. For example, the second electrode terminal 130 may be disposed on a side surface of the case 110 that is different from the first side surface where the first electrode terminal 120 is located, and connected to the case 110 by welding.

The case 110 may have one open side surface to accommodate the electrode assembly. After the electrode assembly is accommodated in the case 110, the open side surface may be covered by a cover of the case 110, thereby sealing the electrode assembly from the external environment. Both a receiving portion of the case 110, which accommodates the electrode assembly, and the cover that encloses the open side surface of the receiving may be formed of a conductive metal. For example, the cover of the case 110 may correspond to a surface oriented opposite to the Y-axis shown in FIG. 1.

The first side surface of the case 110 may be provided with a first electrode terminal 120. In this specification, the first side surface of case 110 may be used in the same sense as the first side surface of battery cell 100. The first side surface may correspond to a surface oriented opposite to the Z-axis shown in FIG. 1.

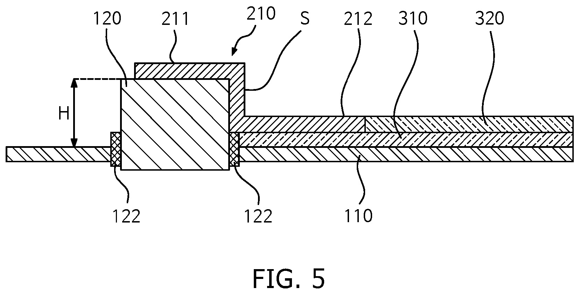

On the first side surface of the case 110, a first electrode terminal 120 may be formed to extend through case 110. An insulating gasket 122 (see, e.g., FIG. 5) may be disposed between the case 110 and the first electrode terminal 120 to provide electrical insulation between the case 110 and the first electrode terminal 120.

At the first side surface of case 110, an electrolyte injection hole may be formed to be spaced apart from the first electrode terminal 120. After the electrolyte injection, the electrolyte injection hold may be sealed by a sealing member.

The insulation unit 300 may be arranged on the first side surface of case 110 to be positioned between the first electrode terminal 120 and one end of the first side surface. The insulation unit 300 may electrically insulate a first connecting part 210, which is connected to the first electrode terminal 120, from the case 110. A step difference may be created due to thicknesses of the first connecting part 210 and a second connecting part 220 that are arranged on the first side surface of case 110. The insulation unit 300 may be disposed on the first side surface to fill the step difference.

The second electrode terminal 130 may be provided on the second side surface of the case 110. Here, the second side surface may be a side surface of case 110 that is perpendicular to the first side surface. For example, the second side surface may correspond to a surface oriented opposite to the X-axis shown in FIG. 1. In this specification, the second side surface of case 110 may be used in the same sense as the second side surface of the battery cell 100.

The first electrode terminal 120 may be disposed on the first side surface of the case 110. The first electrode terminal 120 may be formed to extend through the first side surface of case 110. The insulating gasket 122 (see, e.g., FIG. 5) may be disposed between the first electrode terminal 120 and the case 110, allowing the first electrode terminal 120 to be electrically insulated from the case 110 through the insulating gasket 122. The first electrode terminal 120 may be electrically connected to the first electrode of the electrode assembly. For example, the first electrode terminal 120 may be electrically connected to the first electrode through the first electrode tab to serve as the positive electrode.

The first electrode terminal 120 may be electrically connected to the protective circuit module 400. The first electrode terminal 120 may be electrically connected to the protective circuit module 400 through the first connecting part 210. The first electrode terminal 120 may be welded to the first connecting part 210, but is not limited thereto.

The second electrode terminal 130 may be disposed on the second side surface of the case 110. The second electrode terminal 130 may be disposed on the second side surface, which is perpendicular to the first side surface where the first electrode terminal 120 is disposed. In some embodiments, the second electrode terminal 130 is provided on the case 110 to be oriented perpendicularly to the first electrode terminal 120. For example, the first electrode terminal 120 may be arranged on a particular first side surface of the battery cell 100 depending on the design specifications. The second electrode terminal 130 may be arranged on a different side surface of the case 110 where the first electrode terminal 120 is not located.

By positioning the second electrode terminal 130 on the second side surface of the case 110, the protective circuit module 400 may be disposed across a region of the first side surface of the case 110 between the first electrode terminal 120 and one end of the first side surface that is spaced apart from the first electrode terminal 120. This configuration allows for an increase in the size of the protective circuit module 400 while maintaining the overall size of the battery assembly 10.

The second electrode terminal 130 may be electrically connected to the case 110. Unlike the first electrode terminal 120, the second electrode terminal 130 may be formed in contact with the case 110. The second electrode terminal 130 may be electrically connected to the second electrode of the electrode assembly. The case 110 may be electrically connected to the second electrode through the second electrode tab. The second electrode terminal 130 may be electrically connected to the second electrode through the case 110 and the second electrode tab. The case 110 and the second electrode terminal 130 may be electrically connected to the second electrode to serve as the negative electrode.

The reason for placing the second electrode terminal 130, which has the same polarity as the case 110, in contact with the case 110 is that the case 110, made of stainless steel, may be subject to welding damage during the process of welding connections with external terminals. Therefore, the second electrode terminal 130, which has rigidity in welding, is attached to the case 110 for connection with the external terminals. In examples in which the connection unit 200 is directly welded to the case 110 instead of the second electrode terminal 130, there may be a risk of leakage in the case 110 due to the depth of the welding, or even damage to the electrode assembly accommodated in the case 110. To prevent this issue, the second electrode terminal 130, which offers both welding rigidity and excellent weldability with the case 110 and the connection unit 200, may be placed in contact with the case 110.

The second electrode terminal 130 may include a second electrode plate, which offers welding rigidity and excellent weldability. The second electrode plate may include a nickel (Ni) alloy, but is not limited thereto. The second electrode plate may be attached to the case 110 through ultrasonic welding, but is not limited thereto.

The second electrode terminal 130 may be electrically connected to the protective circuit module 400. The second electrode terminal 130 may be electrically connected to the protective circuit module 400 through the second connecting part 220. The second electrode terminal 130 may be welded to the second connecting part 220, but is not limited thereto.

The connection unit 200 may provide an electrical connection between the first electrode terminal 120 and the protective circuit module 400, as well as between the second electrode terminal 130 and the protective circuit module 400. The connection unit 200 may include a material with high electrical conductivity. For example, the connection unit 200 may include electrically conductive metals such as gold, silver, copper, or nickel, but is not limited to these materials.

The connection unit 200 may include the first connecting part 210 that connects the first electrode terminal 120 to the protective circuit module 400, and a second connecting part 220 that connects the second electrode terminal 130 to the protective circuit module 400.

The first connecting part 210 may be disposed on the first side surface of the case 110 to connect the first electrode terminal 120 to the protective circuit module 400. The second connecting part 220 may be disposed on the first and second side surfaces of the case 110 to be bent along the first and second side surfaces of the case 110 and to connect the second electrode terminal 130 to the protective circuit module 400.

The insulation unit 300 may be disposed on the first side surface of the case 110 to be positioned between the first electrode terminal 120 and one end of the first side surface.

The insulation unit 300 may include a first insulating member 310 and a second insulating member 320. The details of the insulation unit 300 will be further described with reference to FIG. 5.

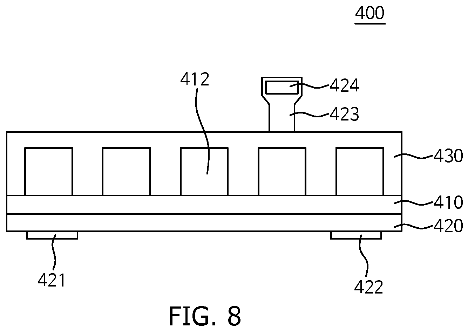

The protective circuit module 400 may be electrically connected to the battery cell 100 to prevent overheating and explosion caused by overcharging, over-discharging, or overcurrent of the battery cell 100. The protective circuit module 400 may include safety elements including passive components (e.g., resistors and capacitors) and/or active components (e.g., field-effect transistors), or protective circuit elements 412 (see, e.g., FIG. 8) on which integrated circuits may selectively be formed.

The protective circuit module 400 may be positioned on the first side surface of the battery cell 100. The protective circuit module 400 may be formed to have a size corresponding to a gap between one end of the first side surface of the battery cell 100 and the first electrode terminal 120, which is spaced apart from one end of the first side surface of the battery cell 100. As described above, with the first electrode terminal 120 disposed on the first side surface of the battery cell 100 and the second electrode terminal 130 disposed on the second side surface of the battery cell 100, the protective circuit module 400 may be positioned across the entire region of the first side surface between the first electrode terminal 120 and one end of the first side surface. This configuration allows for an increase in the size of the protective circuit module 400 without changing the overall size of the battery assembly 10.

The protective circuit module 400 may be electrically connected to the battery cell 100 through the connection unit 200. The protective circuit module 400 may be electrically connected to the first electrode terminal 120 through the first connecting part 210. The protective circuit module 400 may be electrically connected to the second electrode terminal 130 through the second connecting part 220. Through the first electrode terminal 120 and the second electrode terminal 130, the protective circuit module 400 may measure the voltage of the battery cell 100 and the current flowing through the battery cell 100.

The protective circuit module 400 may include a flexible printed circuit board (FPCB). The protective circuit module 400 may include a connector 424 on a first side surface of a lead-out part 423, which is drawn out from the first side surface, to be connected to an external device. The protective circuit module 400 may be connected to the external device through the connector 424. The protective circuit module 400 may transfer electrical energy stored in the battery cell 100 to the external device or receive control signals from the external device to control the operation of the battery cell 100.

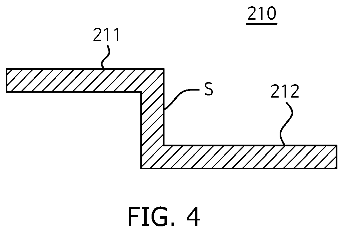

FIG. 4 illustrates the first connecting part 210 according to some embodiments of the present disclosure. FIG. 5 illustrates a state in which the first electrode terminal 120 is connected to the first connecting part 210 according to some embodiments of the present disclosure.

Referring to FIG. 4, the first connecting part 210 may connect the first electrode terminal 120 to the protective circuit module 400. The first connecting part 210 may include a first terminal tab 211 and a first module tab 212 in a step-shaped configuration. The first connecting part 210 may include the first terminal tab 211 that is connected to the first electrode terminal 120, and a first module tab 212 that is connected to the protective circuit module 400 (see, e.g., FIG. 3) and has a stepped portion S extending/leading from the first terminal tab 211.

The first connecting part 210 may include a material having high electrical conductivity. For example, the first connecting part 210 may include electrically conductive metals such as gold, silver, copper, or nickel, but is not limited to these materials.

Referring to FIG. 5, the first electrode terminal 120 may be disposed on the first side surface of the case 110. For example, the first electrode terminal 120 may be formed to extend through the first side surface of the case 110. The insulating gasket 122 may be interposed between the first electrode terminal 120 and the case 110, allowing the first electrode terminal 120 to be electrically insulated from the case 110.

The first insulating member 310 may be disposed on the first side surface of the case 110. The first insulating member 310 may be disposed adjacent to the first electrode terminal 120, thereby providing electrical insulation between the first connecting part 210, which is connected to the first electrode terminal 120, and the case 110.

For example, the first insulating member 310 is disposed on the first side surface of the case 110, and interposed between the first side surface of the case 110 and the first connecting part 210, thereby insulating the first electrode terminal 120 from the case 110. The first insulating member 310 may be attached onto the first side surface of the case 110 with an insulating tape, but is not limited thereto.

The first connecting part 210 may be connected to the first electrode terminal 120. The first terminal tab 211 may be disposed on the first electrode terminal 120 and connected to the first electrode terminal 120 by welding. The first module tab 212 may be disposed on the first insulating member 310. One surface of the first module tab 212 may be in contact with the first insulating member 310. The opposite surface of the first module tab 212 may be in contact with the protective circuit module 400 (see, e.g., FIG. 3).

The stepped portion S between the first terminal tab 211 and the first module tab 212 may correspond to a height H of the first electrode terminal 120 that protrudes from the first side surface. The height of the stepped portion S may be proportional to the height H. The height of the stepped portion S may increase or decrease in proportion to the height H. For example, as the protruding height H of the first electrode terminal 120 increases, the height of the stepped portion S between the first terminal tab 211 and the first module tab 212 may also increase correspondingly.

The second insulating member 320 may be disposed on the first insulating member 310. The second insulating member 320 may be located on one side of the first module tab 212. For example, the second insulating member 320 may be disposed on the first insulating member 310 such that a side surface of the second insulating member 320 contacts a side surface of the first module tab 212. One side surface of the first module tab 212 may be in contact with the first electrode terminal 120, while the opposite side surface of the first module tab 212 may be in contact with the second insulating member 320. The second insulating member 320 may be formed to have a thickness correspond to a thickness of one end of the first module tab 212.

The second insulating member 320 may be disposed on the first insulating member 310, and interposed between the battery cell 100 and the protective circuit module 400 (see, e.g., FIG. 3). For example, due to the thicknesses of the first connecting part 210 and the second connecting part 220 arranged on the first side surface, a step may arise that may weaken the bonding strength between the battery cell 100 and the protective circuit module 400 due to vibrations or external impacts. To prevent this issue, the second insulating member 320 having a thickness corresponding to the step may be additionally placed between the battery cell 100 and the protective circuit module 400. In examples in which the protective circuit module 400 (see, e.g., FIG. 3) is disposed on the first module tab 212, the thickness of the first module tab 212 may create a gap between the protective circuit module 400 and the case 110 to which the first insulating member 310 is attached, and this gap can be filled by the second insulating member 320.

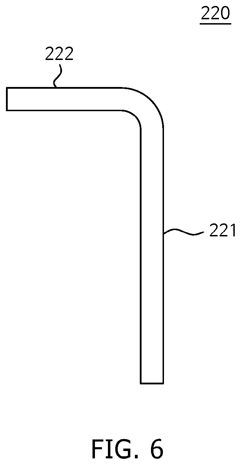

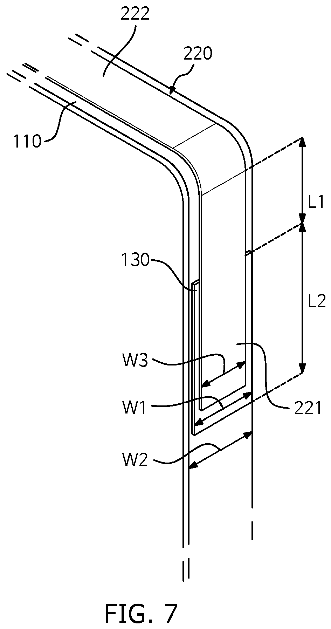

FIG. 6 illustrates the second connecting part 220 according to some embodiments of the present disclosure. FIG. 7 illustrates a state in which the second electrode terminal 130 is connected to the second connecting part 220 according to some embodiments of the present disclosure.

Referring to FIG. 6, the second connecting part 220 may connect the second electrode terminal 130 to the protective circuit module 400 (see, e.g., FIG. 3). The second connecting part 220 may include a second terminal tab 221 and a second module tab 222 in a shape that is bent along the first side surface and the second side surface of the battery cell 100. The second connecting part 220 may include the second terminal tab 221 that is connected to the second electrode terminal 130 disposed on the second side surface of the battery cell 100, and the second module tab 222 that is connected to the protective circuit module 400 disposed on the first side surface of the battery cell 100.

The second connecting part 220 may include a material with high electrical conductivity. For example, the second connecting part 220 may include electrically conductive metals such as gold, silver, copper, or nickel, but is not limited to these materials.

Referring to FIG. 7, the second electrode terminal 130 may be disposed on the second side surface of the case 110. The second electrode terminal 130 may be placed on the second side surface, which is perpendicular to the first side surface where the first electrode terminal 120 is disposed. The second electrode terminal 130 may be formed to be in contact with the case 110.

The second electrode terminal 130 may include a second electrode plate, which offers welding rigidity and excellent weldability. The second electrode plate may include a nickel (Ni) alloy, but is not limited thereto. The second electrode plate may be attached to the case 110 through ultrasonic welding, but is not limited thereto.

The second electrode terminal 130 may be positioned at a set or predetermined distance L1 away from a bending portion connecting the first side surface and the second side surface of the case 110. For example, a corner may be formed at a connection portion between the first side surface and the second side surface, and the corner may have a curvature, which may correspond to the bending portion. The second electrode terminal 130 may be formed flat at a position spaced apart from the bending portion by the set or predetermined distance L1. To enhance the weldability between the second electrode terminal 130 and the case 110, the second electrode terminal 130 may be disposed on the second side surface of the case 110 at the set or predetermined distance L1 away from the bending portion.

A length L2 of the second electrode terminal 130, which is formed along a long-side direction of the second side surface of the case 110, may be greater than the distance L1 from the bending portion. By forming the length L2 of the second electrode terminal 130, which is welded to the case 110 in the long-side direction of the second side surface to be greater than the distance L1, the weldability between the second electrode terminal 130 and the case 110 may be enhanced. For example, the second electrode terminal 130 may be positioned at a set or predetermined distance L1 of 1 mm or more from the bending portion. The second electrode terminal 130 may be formed to have a length L2 of 2 mm or more in the long-side direction of the second side surface, and may be connected to the case 110 by welding, but this is not limited to the specified dimensions.

In a short-side direction of the second side surface of the case 110, a width W1 of the second electrode terminal 130 may be less than a width W2 of the battery cell 100 and greater than a width W3 of the second connecting part 220. Here, the width of the battery cell 100 corresponds to a width of the case 110.

For example, the second electrode terminal 130 may be formed to have the width less than the width of the battery cell 100 by 0.2 mm or more and greater than the width of the second connecting part 220 by 0.2 mm, but is not limited thereto.

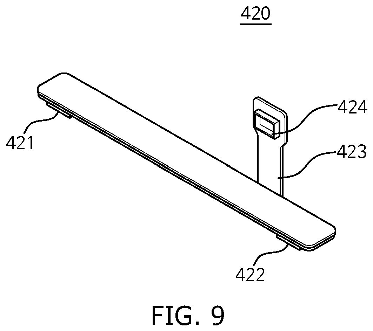

FIG. 8 illustrates a cross-sectional view of the protective circuit module 400 according to some embodiments of the present disclosure. FIG. 9 illustrates a second substrate 420 according to some embodiments of the present disclosure.

Referring to FIGS. 8 and 9, the protective circuit module 400 may be electrically connected to the battery cell 100 (see, e.g., FIG. 1) to prevent or substantially reduce overheating and the possibility of an explosion caused by overcharging, over-discharging, or overcurrent of the battery cell 100. The protective circuit module 400 may include safety elements including passive components (e.g., resistors and capacitors) and/or active components (e.g., field-effect transistors), or protective circuit elements 412 on which may integrated circuits selectively formed.

The protective circuit module 400 may include a first substrate 410, a second substrate 420, and a substrate cap 430.

The protective circuit elements 412 may be integrated on the first substrate 410. The first substrate 410 may be a printed circuit board (PCB), but is not limited thereto.

The second substrate 420 may be disposed below the first substrate 410. For example, the second substrate 420 may be disposed on a bottom surface of the first substrate 410. The second substrate 420 may be in contact with the bottom surface of the first substrate 410. The second substrate 420 may be connected to the first substrate 410 through wiring. The second substrate 420 may transmit or receive electrical signals to or from the first substrate 410 through the wiring. The second substrate 420 may be a flexible printed circuit board (FPCB), but is not limited thereto.

The second substrate 420 may be connected to the connection unit 200 and an external device. The second substrate 420 may include a first connection tab 421, a second connection tab 422, a lead-out part 423, and a connector 424.

The first connection tab 421 may be disposed on one side of the bottom surface of the second substrate 420. The first connection tab 421 may be connected to the first connecting part 210, establishing an electrical connection with the first electrode terminal 120. The second connection tab 422 may be disposed on the opposite side of the bottom surface of the second substrate 420. The second connection tab 422 may be connected to the second connecting part 220, establishing an electrical connection with the second electrode terminal 130. The second substrate 420 may be connected to the first electrode terminal 120 and the second electrode terminal 130 to transmit electrical signals to the protective circuit elements 412 integrated on the first substrate 410, enabling the measurement of voltage and current flow in the battery cell 100.

The lead-out part 423 may extend from one side between the first connection tab 421 and the second connection tab 422. The connector 424, which is connected to an external device, may be disposed on one surface of the lead-out part 423. The protective circuit module 400 may be connected to the external device through the connector 424. The connector 424 allows the protective circuit module 400 to either transmit electrical energy stored in the battery cell 100 to the external device or receive control signals from the external device to control the operation of the battery cell.

The substrate cap 430 may be disposed on the first substrate 410 to cover the protective circuit elements 412. The substrate cap 430 may be molded on the first substrate 410 with a resin material to cover the protective circuit elements 412.

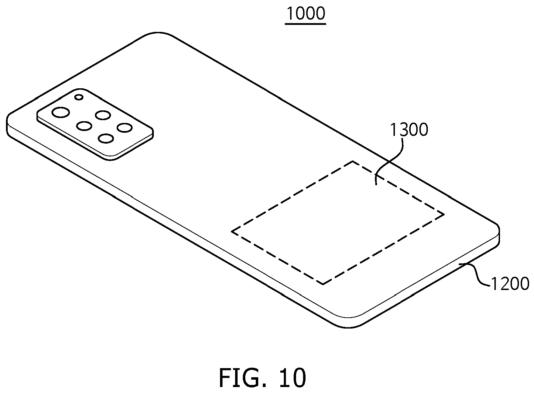

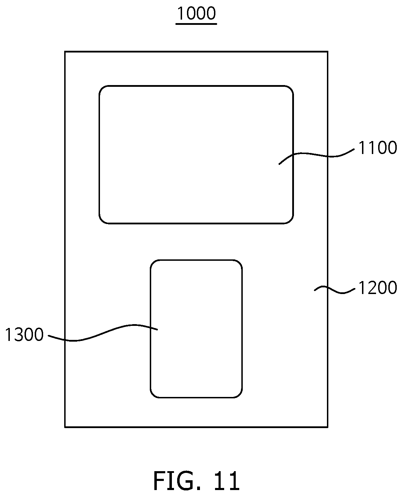

FIG. 10 illustrates a battery driving device according to some embodiments of the present disclosure. FIG. 11 illustrates a battery assembly arranged in a battery driving device according to some embodiments of the present disclosure.

Referring to FIGS. 10 and 11, a battery driving device 1000 according to some embodiments of the present disclosure may include an operation unit 1100 that performs a set operation, a housing 1200 that accommodates the operation unit 1100 therein, and a power unit 1300 that is fixed inside the housing 1200 and supplies power to the operation unit 1100.

The battery driving device 1000 having the power unit 1300 may be a smartphone, but is not limited thereto. For example, the battery driving device 1000 may be used in various apparatus that use electric energy stored in the power unit 1300 as a power source and utilize high-performance, high-precision protective circuits.

The operation unit 1100 may include various operational modules that receive power and are driven by electric energy. For example, the operation unit 1100 may include an application processor (AP) and a central process unit (CPU) in a portable electronic device, as well as a motor control unit (MCU) of an electric mobility device.

In some embodiments, a printed circuit board, including signal transmission wiring, may be arranged inside the housing 1200. The operation unit 1100 may be mounted on the printed circuit board and electrically connected to other components of the battery driving device 1000.

The housing 1200 may accommodate therein the operation unit 1100 and the power unit 1300 and provide the overall outer appearance of the battery driving device 1000. The housing 1200 may be configured in various structural forms, as long as it supports the operation unit 1100 and the power unit 1300 arranged therein and protects these units from external impacts.

The power unit 1300 may be fixed within the housing 1200 to stably supply power to the operation unit 1100. For example, the power unit 1300 may include a rechargeable secondary battery. The power unit 1300 may have a configuration substantially identical to the battery assembly 10 described with reference to FIGS. 1 to 9.

For example, the power unit 1300 may be arranged within a designated power area inside the housing 1200 and connected to a power terminal on the printed circuit board. Accordingly, the operation unit 1100 may be driven using the electrical energy stored in the battery assembly 10.

The power unit 1300 may include a battery cell 100 having the case 110 made of stainless steel, in which an electrode assembly is housed, and the protective circuit module 400 disposed on the outside of the battery cell 100.

According to the battery assembly 10 as described above, an allocation area for the protective circuit module 400 can be expanded by disposing (i.e., positioning/locating/arranging) the second electrode terminal 130 on the second side surface perpendicular to the first side surface where the first electrode terminal 120 is disposed. This configuration allows for an increase in the size of the protective circuit module 400 while maintaining the same size for the battery assembly 10. By increasing the size of the protective circuit module 400, more protective circuit elements can be arranged, thereby providing the protective circuit module 400 with higher operational precision and higher functionality.

The protective circuit module 400 with higher operational precision and higher functionality can stabilize the operation of the battery cell 100, thereby increasing the operational stability of the battery driving device 1000 that is equipped with the battery assembly 10.

Although the present disclosure has been described above with respect to embodiments thereof, the present disclosure is not limited thereto. Various modifications and variations can be made thereto by those skilled in the art within the scope of the present disclosure.

### Description of some of the Reference Symbols

10: battery assembly
100: battery cell
110: case
120: first electrode terminal
130: second electrode terminal
200: connection unit
210: first connecting part
220: second connecting part
310: first insulating member
320: second insulating member
400: protective circuit module
410: first substrate
420: second substrate
424: connector
430: substrate cap
1000: battery driving device
1100: operation unit
1200: housing
1300: power unit

## Claims

1. A battery assembly (10) comprising:
a battery cell (100) that accommodates an electrode assembly and comprises a first electrode terminal (120) on a first side surface of the battery cell (100) and a second electrode terminal (130) on a second side surface of the battery cell (100) different from the first side surface;
a protective circuit module (400) on the first side surface of the battery cell (100); and
a connection unit (210, 220) electrically connecting the first electrode terminal (120) to the protective circuit module (400) and the second electrode terminal (130) to the protective circuit module (400).

2. The battery assembly (10) as claimed in claim 1, wherein the protective circuit module (400) is formed to have a size corresponding to a gap between one end of the first side surface and the first electrode terminal (120).

3. The battery assembly (10) as claimed in any one of claims 1 to 2, wherein the second electrode terminal (130) is on the second side surface that is perpendicular to the first side surface where the first electrode terminal (120) is positioned.

4. The battery assembly (10) as claimed in any one of claims 1 to 3, wherein the connection unit (210, 220) comprises:
a first connecting part (210) on the first side surface and connecting the first electrode terminal (120) to the protective circuit module (400); and
a second connecting part (220) on the first and second side surfaces to be bent along the first and second side surfaces and connecting the second electrode terminal (130) to the protective circuit module (400).

5. The battery assembly (10) as claimed in claim 4, wherein the first connecting part (210) comprises:
a first terminal tab (211) connected to the first electrode terminal (120); and
a first module tab (212) connected to the protective circuit module (400) and having a stepped portion extending from the first terminal tab (211).

6. The battery assembly (10) as claimed in claim 5, wherein a height of the stepped portion (S) corresponds to a height of the first electrode terminal (120) that protrudes from the first side surface.

7. The battery assembly (10) as claimed in any one of claims 4 to 6, wherein the second connecting part (220) comprises:
a second terminal tab (221) on the second side surface and connected to the second electrode terminal (130); and
a second module tab (222) on the first side surface to be oriented perpendicularly to the second terminal tab (221), and connected to the protective circuit module (400).

8. The battery assembly (10) as claimed in any one of claims 1 to 7, wherein the second electrode terminal (130) is on the second side surface at a set distance away from a bending portion connecting the first side surface and the second side surface.

9. The battery assembly (10) as claimed in claim 8, wherein the second electrode terminal (130) is formed to have a length greater than the set distance from the bending portion.

10. The battery assembly (10) as claimed in any one of claims 8 to 9, wherein, in a short-side direction of the second side surface, a width of the second electrode terminal (130) is less than a width of the battery cell (100) and greater than a width of the second connecting part (220).

11. The battery assembly (10) as claimed in any one of claims 1 to 10, wherein the protective circuit module (400) comprises:
a first substrate (410) on which protective circuit elements (412) are integrated; and
a substrate cap (430) on the first substrate (410) to cover the protective circuit elements.

12. The battery assembly (10) as claimed in claim 11, wherein the protective circuit module (400) further comprises a second substrate (420) on a bottom surface of the first substrate (410) and connected to the connection unit (200) and an external device.

13. The battery assembly (10) as claimed in claim 12, wherein the second substrate (420) comprises:
a first connection tab (421) electrically connected to the first electrode terminal (120); and
a second connection tab (422) electrically connected to the second electrode terminal (130);
wherein the second substrate (420) preferably further comprises:
a lead-out part (423) that extends from one side between the first connection tab (421) and the second connection tab (422); and
a connector (424) on one surface of the lead-out part (423) and connected to the external device.

14. The battery assembly (10) as claimed in any one of claims 1 to 13, further comprising an insulation unit (300) on the first side surface between the first electrode terminal (120) and one end of the first side surface.

15. A battery driving device comprising:
an operation unit (1100) configured to operate by receiving power;
a housing (1200) that accommodates the operation unit (1100) to fix the operation unit (1100); and
a power unit (1300) that is fixed within the housing (1200) to supply power to the operation unit (1100);
wherein the power unit (1300) comprises the battery assembly (10) as claimed in any one of claims 1 to 14.
